Europäisches Patentamt

European Patent Office

Office européen des brevets

(19)

(11) Veröffentlichungsnummer: **0 223 169**
**B1**

(12) **EUROPÄISCHE PATENTSCHRIFT**

(45) Veröffentlichungstag der Patentschrift:
03.01.90

(51) Int. Cl.⁴: **C21C 5/46, G01N 1/12**

(21) Anmeldenummer: 86115502.6

(22) Anmeldetag: 08.11.86

(54) Vorrichtung zur Handhabung an eine höhenverstellbare Sondenlanze ankuppelbarer Sonden, insbesondere Mess- und Probenahmesonden.

(30) Priorität: 19.11.85 DE 3540946

(43) Veröffentlichungstag der Anmeldung:
27.05.87 Patentblatt 87/22

(45) Bekanntmachung des Hinweises auf die Patenterteilung:
03.01.90 Patentblatt 90/1

(84) Benannte Vertragsstaaten:
AT BE DE GB IT NL

(56) Entgegenhaltungen:
EP-A- 0 113 653
DE-A- 2 631 060
DE-A- 3 044 609
FR-A- 2 410 263

(73) Patentinhaber: Fried. Krupp Gesellschaft mit
beschränkter Haftung, Altendorfer Strasse 103,
D-4300 Essen 1(DE)

(72) Erfinder: Heinz, Winfried, Benlupweg 3,
D-2948 Schortens 5(DE)
Erfinder: Schwarz, Wilhelm, Prof. Dr., Zum Wolfsloch 27,
D-5910 Kreuztal(DE)

## Beschreibung

Die Erfindung betrifft eine Vorrichtung zur Handhabung an eine höhenverstellbare Sondenlanze ankuppelbarer Sonden, insbesondere Meß- und Probenahmesonden, mit einem Tragrahmen, der um eine zur Lanzenachse parallele ortsfeste Rahmenachse in verschiedene Arbeitsstellungen schwenkbar ist und - von oben nach unten gesehen - einen auseinanderklappbaren Zentriertrichter, einen am Tragrahmen höhenverfahrbaren Hubwagen mit daran befestigter Sondenhaltezange, ein Trennorgan und eine Probenhaltezange aufweist, wobei das Trennorgan um eine zur Rahmenachse parallele Drehachse zwischen die beiden Haltezangen schwenkbar ist.

Eine einen Manipulator darstellende Handhabungsvorrichtung der eingangs erwähnten Gattung, welche die Überwachung der in einem metallurgischen Gefäß enthaltenen Schmelze mittels Meßsonden und Probenahmesonden zur Temperaturmessung/Badstandsmessung bzw. zur Probeentnahme ermöglicht, ist aus der DE-A1-30 44 609 bekannt. Abgesehen von der als Transporteinrichtung dienenden Sondenlanze ist der Handhabungsvorrichtung ein Magazin und ggf. eine Aufnahmevorrichtung beispielsweise in Form eines Abwurftrichters zugeordnet. Diese nimmt den von der Probenahmesonde abgetrennten Probenahmekopf auf und leitet ihn der Untersuchung in einem Laborraum zu. Dem Magazin mit in Längsrichtung nebeneinanderliegenden Magazinschächten ·sind die gespeicherten Sonden einzeln entnehmbar und in eine zur Lanzenachse parallele Entnahmestellung bringbar. In dieser können sie durch Betätigen des gleichzeitig als Zentrierzange wirksamen Zentriertrichters und der Sondenhaltezange von der Handhabungsvorrichtung übernommen werden, sofern diese die der Entnahmestellung angepaßte Magazinstellung einnimmt. Anschließend läßt sich die Handhabungsvorrichtung in eine Meßstellung schwenken, in der die Achse der festgeklemmten Sonde zumindest annähernd mit der Lanzenachse zusammenfällt.

Zum Ankuppeln der Sonde wird die vom Zentriertrichter erfaßte und geführte Sondenlanze stillgesetzt, sobald sie beim Absenken in Richtung auf die Sonde etwa zwei Drittel des erforderlichen Kupplungsweges zurückgelegt hat. Im Anschluß daran wird der Kupplungsvorgang dadurch abgeschlossen, daß die Sonde durch Hochfahren des Hubwagens mit der daran befestigten Sondenhaltezange auf die Sondenlanze zu bewegt wird. Vor dem Anheben der Sonde muß dabei der bezüglich des Tragrahmens nicht höhenverstellbare Zentriertrichter auseinandergeklappt werden.

Die geschilderten Bewegungsabläufe beim Ankuppeln sind in zeitlicher und steuerungstechnischer Hinsicht aufwendig: Anzustreben sind jedoch insbesondere kurze Kupplungszeiten, um möglichst rasch Sonden auswechseln und die zur Überwachung des metallurgischen Gefäßes erforderlichen Meßfahrten in schneller Aufeinanderfolge ausführen zu können.

Ein weiterer Nachteil der bekannten Handhabungsvorrichtung ist darin zu sehen, daß die Probenhaltezange - ebenso wie die Sondenhaltezange - nicht schwenkbar am Tragrahmen befestigt ist. Im Falle einer Probenahme muß der Tragrahmen daher nach dem Abtrennen des Probenahmekopfes mehrere Schwenkbewegungen ausführen, um zunächst den Probenahmekopf der Auswertung zuzuführen und anschließend, d.h. nach Rückschwenken in die Meßstellung, den Sondenrest durch Abwerfen in das metallurgische Gefäß zu entsorgen. Mehrere Schwenkbewegungen sind auch dann erforderlich, wenn der Sondenrest wegen der damit verbundenen Verunreinigung nicht dem metallurgischen Gefäß zugeführt werden kann, sondern in ein zusätzliches Fallrohr abgeworfen werden muß.

Der Erfindung liegt die Aufgabe zugrunde, eine Handhabungsvorrichtung der eingangs erwähnten Gattung in der Weise weiterzuentwickeln, daß sich die Bewegungsabläufe beim Ankuppeln von Sonden an eine Sondenlanze sowie beim Abtrennen von Probenahmeköpfen von einer Probenahmesonde vereinfachen und mit geringerem Zeitaufwand ausführen lassen.

Die gestellte Aufgabe wird durch eine Handhabungsvorrichtung gelöst, welche im wesentlichen die Merkmale des Anspruchs 1 aufweist. Der Grundgedanke der Erfindung besteht danach darin, zwei Handhabungsorgane der Handhabungsvorrichtung - namlich den auch als Zentrierzange wirksamen Zentriertrichter und die Probenhaltezange - mit einer zusätzlichen Bewegungsmöglichkeit bezüglich des Tragrahmens auszustatten: Während der Zentriertrichter bezüglich des Tragrahmens höhenverfahrbar ist, kann die Probenhaltezange bezüglich des Tragrahmens um eine zur Rahmenachse parallele Schwenkachse bewegt werden. Durch die der Bewegung des Hubwagens angepaßte Höhenverfahrbarkeit des Zentriertrichters läßt sich der Kupplungsvorgang insofern vereinfachen und beschleunigen, als die in eine vorgegebene Kupplungsstellung gebrachte Sondenlanze dabei stillsteht und der Hubwagen nach dem Erfassen der Sondenlanze durch den mitbewegten Zentriertrichter den gesamten Kupplungshub ausführt. Der Kupplungsvorgang setzt sich also zusammen aus den Bewegungen des Zentriertrichters und des Hubwagens bis zum Zentrieren der Meßlanze bezüglich der Sonde mit anschließendem Auseinanderklappen des Zentriertrichters und aus dem Resthub des Hubwagens und des nicht mehr wirksamen Zentriertrichters bis zur endgültigen Befestigung der Sonde an der Sondenlanze; das Auseinanderklappen des Zentriertrichters kann dabei ausgelöst werden, nachdem die Kupplungsbewegung des Zentriertrichters und des Hubwagens kurzzeitig unterbrochen worden ist.

Eine besonders rasche Ausführungsform des Kupplungsvorgangs läßt sich dadurch verwirklichen, daß das Auseinanderklappen fliegend, d.h. ohne Unterbrechung der Kupplungsbewegung, erfolgt.

Die schwenkbare Anordnung der Probenhaltezange ermöglicht es, den von dieser erfaßten Probenahmekopf - unabhängig von einer Bewegung des Tragrahmens - aus dem Bereich der Sondenlanze und der darunter befindlichen Gefäßüberwachungsöffnung zu entfernen und beispielsweise in den Abwurftrichter eines Fallrohres abzuwerfen; unmittelbar im Anschluß an das Wegschwenken der Probenhaltezange kann der Sondenrest durch Öffnen der Sondenhaltezange dem metallurgischen Gefäß zugeführt werden. Bedingt durch die Schwenkbarkeit der Probenhaltezange kann der Sondenrest ohne zusätzliche Bewegung des Tragrahmens auch in ein zweites Fallrohr eingeleitet werden; die beiden Fallrohre und zugehörigen Abwurftrichter sind dabei vorteilhaft in der Nähe des die Sonden enthaltenden Magazins angeordnet.

Die Anpassung der Bewegung des Zentriertrichters an diejenige des Hubwagens kann durch Verwendung zweier parallel geschalteter Antriebselemente - insbesondere Kraftzylinder - herbeigeführt werden. Bei einer besonders einfachen Ausführungsform des Erfindungsgegenstandes ist der Zentriertrichter an dem Hubwagen befestigt (Anspruch 2). Vorzugsweise stützt sich der Zentriertrichter dabei an einem Verlängerungsträger ab, der an der Oberseite des Hubwagens angebracht ist (Anspruch 3).

Falls der Zentriertrichter starr mit dem Hubwagen in Verbindung steht, kann der diesem zugeordnete Antrieb aus einem bzw. mehreren Kraftzylindern oder einem Zahnstangenantrieb bestehen. Vorzugsweise wird der Hubwagen mittels eines Hydraulikzylinders bewegt, dessen Hub zum Öffnen des Zentriertrichters unterbrochen werden kann. Bei einer besonders vorteilhaften Ausführungsform des Erfindungsgegenstandes weist der Zentriertrichter eine Schalteinheit auf, über welche er - abhängig von einem einstell baren Wert des vom Hubwagen zurückgelegten Hubweges - selbsttätig auseinanderklappbar ist (Anspruch 4). Die Schalteinheit kann in einfacher Weise aus einem Endschalter bestehen, welcher nach Zurücklegen eines vorgegebenen Hubweges vom Hubwagen betätigt wird und dadurch das Öffnen des Zentriertrichters herbeiführt. Der Öffnungsvorgang läßt sich in einfacher Weise mittels eines Fühlers auslösen, der bei Annäherung an eine Schaltfahne durch einen Steuerimpuls die Antriebseinheit des Zentriertrichters in Betrieb setzt. Der Fühler und die Schaltfahne sind dabei jeweils an verschiedenen Bestandteilen angebracht, namlich entweder (mittelbar oder unmittelbar) am Hubwagen oder an der diesen abstützenden Führungsschiene (Anspruch 5).

Die Erfindung wird nachfolgend anhand der Zeichnung im einzelnen erläutert.
Es zeigen:

Fig. 1 stark schematisiert eine Seitenansicht der erfindungsgemäßen Handhabungsvorrichtung,
Fig. 2 in verändertem Maßstab eine Teilansicht der Handhabungsvorrichtung nach Fig. 1 im Bereich des Zentriertrichters und
Fig. 3 eine Draufsicht auf den Zentriertrichter mit zugehöriger Steuerung.

Die als Manipulator ausgebildete Handhabungsvorrichtung ist mit einem Tragrahmen 1 ausgestattet, der über zwei Lagerkonsolen 2 und 3 um eine lotrechte Rahmenachse 4 schwenkbar an der ortsfesten Umgebung, beispielsweise einer Tragkonstruktion oberhalb des zu überwachenden metallurgischen Gefäßes, aufgehängt ist.

Der Tragrahmen weist als Tragelemente zwei lotrecht angeordnete Rohre 5 und 6 auf, die über zwei waagerecht liegende Rohre 7 und 8 mit zugehörigen seitlichen Aussteifungsblechen 9 miteinander verbunden sind; als zusätzliche Aussteifung ist ein Schrägrohr 10 vorhanden, welches unter Bildung eines Dreieckverbandes mit den Rohren 5 und 8 in Verbindung steht.

Das obenliegende Rohr 7 ist zusätzlich mit einer Anschlußkonsole 11 ausgestattet, an welche die Kolbenstange 12 eines Hydraulikzylinders angelenkt ist. Durch dessen Betätigung kann die Handhabungsvorrichtung zwischen einer Magazinstellung außerhalb des Bereichs der Überwachungsöffnung des zugehörigen metallurgischen Gefäßes und einer Meßstellung im Bereich der Lanzenachse 13a einer Sondenlanze geschwenkt werden.

Der den Tragrahmen 1 bewegende Hydraulikzylinder kann selbstverständlich auch durch einen geeigneten, insbesondere hydraulischen Schwenkantrieb ersetzt werden.

Die in Richtung des Doppelpfeils 14 höhenverstellbar gehaltene Sondenlanze 13 weist auf ihrer Unterseite einen Anschlußabschnitt 13b auf, welcher das Aufschieben bzw. Abziehen einer (nicht dargestellten) Sonde, insbesondere Meß- oder Probenahmesonde, ermöglicht. Eine derartige Sondenlanze ist in der DE-A1-2807152 sowie in dem Prospekt 199-804 de 01.81 "Sublance-System" der Fried. Krupp GmbH, Krupp Industrie- und Stahlbau / Kranbau Wilhelmshaven, D-2940 Wilhelmshaven, beschrieben.

Der Tragrahmen 1 weist auf der von der Rahmenachse 4 abgewandten Seite - von oben nach unten gesehen - mehrere Zentrier- und Handhabungsorgane auf, nämlich einen auseinanderklappbaren Zentriertrichter 15 zur gegenseitigen Zentrierung der Sondenlanze 13 und der in Frage kommenden Sonde, eine Sondenhaltezange 16, ein Trennorgan 17 zum Abtrennen des Probenahmekopfes einer Probenahmesonde und eine Probenhaltezange 18.

Der Zentriertrichter 15 und die Sondenhaltezange 16 sind über einen Hubwagen 19 höhenverfahrbar, der sich über Führungsrollen 19a beweglich an einer Führungsschiene 20 abstützt.Diese ist im Bereich ihrer oben und unten liegenden Endabschnitte über Konsolen 21 und 22 an dem Rohr 5 befestigt; die Konsolen sind gleichzeitig als den Hubweg des Hubwagens festlegende Endanschläge ausgebildet.

Der Antrieb des Hubwagens 19 besteht aus einem Hydraulikzylinder 23, dessen Kolbenstange 23a im Bereich der oben liegenden Führungsrollen 19a an den Hubwagen angelenkt ist und dessen Gehäuse 23b über eine Konsole 24 am Rohr 5 befestigt ist.

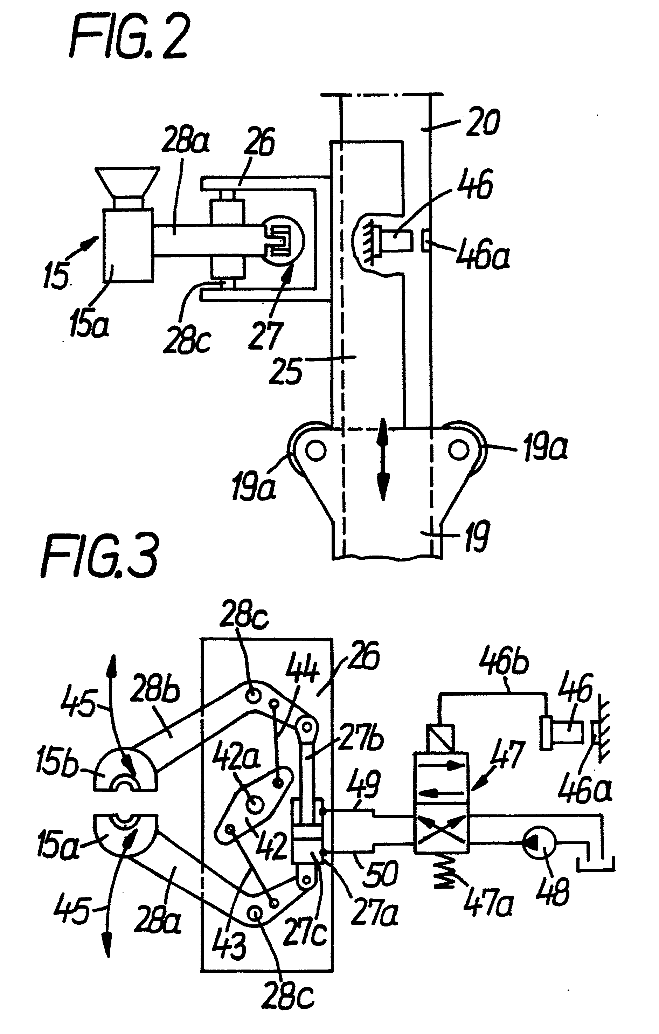

An der Oberseite des Hubwagens 19 ist ein die Führungsschiene 20 teilweise umgreifender Verlängerungsträger 25 angebracht, dessen Endabschnitt ein Schutzblech 25a trägt. An dem Verlängerungsträger ist weiterhin ein Rahmen 26 befestigt, an dem zwei Schwenkarme 28a und 28b drehbar gehalten sind; diese stehen einerseits mit den Trichterhälften 15a und 15b und andererseits mit einer (lediglich schematisch dargestellten) Antriebseinheit 27 in Verbindung (vgl. dazu Fig. 2 und 3). Durch Ansteuern der Antriebseinheit 27 können die Trichterhälften um Achsen 28c geschwenkt werden mit der Folge, daß der Zentriertrichter 15 auseinandergeklappt bzw. geschlossen wird.

Die Sondenhaltezange 16 besteht in an sich bekannter Weise aus zwei Zangenarmen 16a und 16b, die mit prismatischen Klemmflächen 16c ausgestattet und die um eine Zangenachse 16d schwenkbar über eine Tragplatte 29 am Hubwagen 19 befestigt sind. Der Drehantrieb für die Zangenarme besteht aus einem ebenfalls an der Tragplatte befestigten Drehflügelmotor 30.

Das Trennorgan 17 unterhalb der Sondenhaltezange 16 weist als wesentliche Bestandteile eine an einem Schwenkarm 31 gehaltene Trennscheibe 32 auf, die durch einen Trennscheibenmotor 33 vorzugsweise in Form eines Elektromotors antreibbar und zum Teil von einem Schutzkäfig 34 umschlossen ist. Der Schwenkarm 31 ist mittels eines pneumatischen Drehmotors 35 drehbar an einer Konsole 36 des Rohres 5 gehalten. Durch Betätigung des Drehmotors kann die umlaufende Trennscheibe 32 in den Bereich einer von der Handhabungsvorrichtung gehaltenen Sonde (deren Achse mit der dargestellten Lanzenachse 13a zusammenfällt) geschwenkt und dadurch ein Trennvorgang bewirkt werden.

Die Probenhaltezange 18 - deren mit prismatischen Klemmflächen 18c ausgestattete Zangenarme 18a, 18b mittels eines Drehflügelmotors 37 um die Zangenachse 18d beweglich sind - stützt sich über einen Schwenkarm 38 mit zugehörigem Drehmotor 39 und über eine Konsole 40 ebenfalls am Rohr 5 ab. Durch Ansteuern des Drehmotors 39 kann die Probenhaltezange 18 - unabhängig von der Stellung des Tragrahmens 1 - um die lotrechte Schwenkachse 39a aus dem Bereich unterhalb der Zentrier- und Halteorgane 15 bzw. 16 weggeschwenkt werden. Abgesehen von den Bestandteilen 18a, 18b und 18c ist die Probenhaltezange nach unten hin durch ein Schutzblech 41 abgedeckt, welches ebenfalls mit der Konsole 40 in Verbindung steht.

Die erfindungsgemäße Handhabungsvorrichtung arbeitet wie folgt:

Zur Übernahme einer außerhalb eines Magazins (vgl. die DE-A 1-30 44 609) lotrecht gehaltenen Sonde wird der Tragrahmen 1 durch Inbetriebsetzen des Hydraulikzylinders 12 in die Magazinstellung geschwenkt, wobei die Haltezangen 16, 18 ebenso wie der Zentriertrichter 15 geöffnet sind und das Trennorgan 17 eine Ruhestellung außerhalb des Bereichs der genannten Zentrier- und Halteorgane einnimmt; der Hubwagen 19 befindet sich in der dargestellten unteren Ausgangsstellung, d.h. er stützt sich auf der Anschlagfläche 22a der Konsole 22 ab. Nach Erreichen der Magazinstellung wird der Drehflügelmotor 30 angesteuert, wodurch die Zangenarme 16a, 16b sich aufeinander zu bewegen und die Sonde festgeklemmt wird; in entsprechender Weise wird der Zentriertrichter 15 durch Ansteuern des Drehmotors 27 geschlossen und erfaßt dabei mit seinem nach unten gerichteten Endabschnitt den oberen Teil der Sonde: Dadurch ist sichergestellt, daß letztere zu einem späteren Zeitpunkt über den Anschlußabschnitt 13b der Sondenlanze geschoben und an diese angekuppelt wird.

Im Anschluß daran bewegt sich der Tragrahmen 1 in eine Meßstellung, in welcher die mitgeführte Sonde gleichachsig mit der Sondenlanze 13 unter dieser liegt; die Sondenlanze nimmt dabei bezüglich der Handhabungsvorrichtung eine vorgegebene Kupplungsstellung ein. Der Kupplungsvorgang wird bei stillstehender Sondenlanze 13 durch Hochfahren des Hubwagens 19 mittels des Hydraulikzylinders 23 eingeleitet; dabei wird die Sonde über die weiterhin geschlossenen Zentrier- und Halteorgane 15, 16 in Richtung auf die Sondenlanze angehoben und schließlich auf deren Anschlußabschnitt 13b aufgeschoben. Nach dem damit verbundenen Zentrieren von Meßlanze und Sonde wird der Zentriertrichter 15 durch Betätigen der Antriebseinheit 27 auseinandergeklappt, bevor der Hubwagen 19 nebst geschlossener Sondenhaltezange 16 den Resthub ausführt und die Sonde an dem Lanzenabsatz 13c zur Anlage bringt. Nach Abschluß des auf diese Weise ausgeführten Kupplungsvorgangs wird die Sondenhaltezange 16 geöffnet, der Hubwagen 19 in die untere Ausgangsstellung abgesenkt und der Tragrahmen 1 in die eingangs beschriebene Magazinstellung zurückgeschwenkt.

Sobald die Sonde die beabsichtigte Messung (insbesondere Temperaturmessung oder Badstandsmessung) oder die Probeentnahme ausgeführt hat, wird die Handhabungsvorrichtung erneut in Betrieb gesetzt.

Nach dem Hochfahren der Sondenlanze 13 mit der angekuppelten, verbrauchten Sonde in eine vorgegebene Trennstellung wird der Tragrahmen wiederum in die Meßstellung geschwenkt; anschließend wird die verbrauchte Sonde durch Schließen der Haltezangen 16 und 18 festgeklemmt, bevor durch Hochfahren der Sondenlanze die Abtrennung der Sonde herbeigeführt wird. Die (im Falle der Temperaturmessung oder der Badstandsmessung) nicht weiter verwendbare Meßsonde kann anschließend durch Öffnen der Haltezangen 16 und 18 in das zu überwachende metallurgische Gefäß abgeworfen werden.

Falls mit der an die Sondenlanze angekuppelten Sonde eine Probe genommen wurde, wird vor dem Abwerfen des nicht verwendbaren Sondenrestes der zu untersuchende Probenahmekopf mittels des Trennorgans 17 abgetrennt. Zu diesem Zweck wird über den Trennscheibenmotor 33 die Trennscheibe 32 in Drehung versetzt, bevor der Schwenkarm 31 mittels des Drehmotors 35 in eine Schnittstellung zwischen die Haltezangen 16 und 18 geschwenkt wird. Diese Schwenkbewegung hat das Unterteilen der Probenahmesonde in einen oberhalb der Trennscheibe 32 liegenden Sondenrest und in einen unterhalb der Trennscheibe befindlichen Probenahmekopf zur Folge. Die beiden voneinander getrennten Bestandteile der Probenahmesonde werden zunächst weiterhin von der Sondenhaltezange 16 bzw. von der Probenhaltezange 18 festgehalten. Nach dem Rückschwenken (oder aus Gründen der Zeitersparnis gleichzeitig mit dem Rückschwenken) des Trennorgans 17 in die Ruhestellung wird die Probenhaltezange 18 mit dem in ihr festgeklemmten Probenahmekopf durch Ansteuern des Drehmotors 39 aus dem Bereich unterhalb des Sondenrestes wegbewegt, so daß dieser durch Öffnen der Sondenhaltezange 16 ohne weitere Schwenkbewegung des Tragrahmens 1 durch die Überwachungsöffnung in das metallurgische Gefäß abgeworfen werden kann.

Mit dem Rückschwenken des Tragrahmens 1 in die Magazinstellung gelangt der Probenahmekopf in den Bereich einer Aufnahmevorrichtung (beispielsweise in Form eines Abwurftrichters mit nachfolgendem Fallrohr), in welche er durch Öffnen der Probenhaltezange 18 abgeworfen und der nachfolgenden Untersuchung zugeführt werden kann. Die Aufnahmevorrichtung kann jedoch auch so bezüglich der Handhabungsvorrichtung auch so angeordnet sein, daß der Probenahmekopf durch die Schwenkbewegung der Probenhaltezange 18 allein - d.h. bei weiterhin in der Meßstellung befindlichem Tragrahmen 1 - in eine seinen Abtransport ermöglichende Lage gelangt.

In Abhängigkeit von den vorgegebenen Platzverhältnissen kann die Aufnahmevorrichtung auch so angebracht sein, daß der Probenahmekopf in einer Zwischenstellung des Tragrahmens 1 - d.h. vor der Vollendung der Rückschwenkbewegung des Tragrahmens in die Magazinstellung - abgeworfen und der Aufnahmevorrichtung zugeführt wird. Besonders vorteilhaft läßt sich der Erfindungsgegenstand - auch unter dem Gesichtspunkt der Zeitersparnis - im Zusammenwirken mit zwei voneinander getrennten Aufnahmevorrichtungen (in Form von Fallrohren) einsetzen, die zweckmäßigerweise außerhalb des Bereichs der Sondenlanze in der Nähe des Magazins (d.h. in der Nähe der Magazinstellung der Handhabungsvorrichtung) liegen sollten.

Bei einer derartigen Anordnung kann der Tragrahmen der Handhabungsvorrichtung unmittelbar nach dem Abkuppeln der verbrauchten Sonde - ggf. mit in Betrieb befindlicher Trennscheibe - in die Magazinstellung zurückbewegt werden, bevor entweder die Sonde als Einheit in ein bestimmtes Fallrohr oder der Probenahmekopfund der Sondenrest nach entsprechender Bewegung der Probenhaltezange in zwei voneinander getrennte Fallrohre abgeworfen wird bzw. werden.

Die mit der Erfindung erzielten Vorteile bestehen darin, daß sich die Handhabung der Sonden zur Überwachung eines metallurgischen Gefäßes in steuerungstechnischer Hinsicht vereinfachen läßt und einen geringeren Zeitaufwand als bisher nach sich zieht.

Die Verwendung eines bezüglich des Tragrahmens höhenverstellbaren Zentriertrichters ermöglicht es, den Zentrier- und Kupplungsvorgang ausschließlich durch Bewegen des gleichzeitig als Zentrierzange wirksamen Zentriertrichters und der Sondenhaltezange zu bewirken. Die Verwendung einer bezüglich des Tragrahmens schwenkbaren Probenhaltezange gestattet es, diese unabhängig vom Tragrahmen und dessen Bestandteilen bzw. zusätzlich zu diesem und damit schneller als bisher in eine gewünschte Stellung zu bringen und zu betätigen. Der grundsätzliche Aufbau und die Arbeitsweise des Zentriertrichters 15, der Sondenhaltezange 16, des Trennorgans 17 und der Probenhaltezange 18 sind in der eingangs erwähnten DE-A1-3044601 und in dem Prospekt 199-806 de 01.81 "Sublance-System, Magazine/Manipulator" der Fried. Krupp GmbH, Krupp Industrie- und Stahlbau / Kranbau Wilhelmshaven, D-2940 Wilhelmshaven, beschrieben.

Bei der Ausführungsform nach Fig. 2 und 3 weist der Zentriertrichter 15 eine Antriebseinheit 27 in Form eines Hydraulikzylinders auf, wobei das Zylindergehäuse 27a und die Kolbenstange 27b gelenkig an einen Schwenkarm 28a bzw. 28b angeschlossen sind (vgl. dazu Fig. 3).

Der Rahmen 26 trägt darüber hinaus einen Hebel 42, der um eine Achse 42a drehbar ist und über Lenker 43 und 44 mit den Schwenkarmen 28a und 28b in Verbindung steht; auf diese Weise ist sichergestellt, daß die Trichterhälften 15a, 15b eine bezüglich des Rahmens 26 symmetrische (durch Doppelpfeile 45 angedeutete) Bewegung ausführen.

In Höhe des Zentriertrichters 15 ist der am Hubwagen befestigte Verlängerungsträger 25 mit einem Fühler 46 ausgestattet; dieser arbeitet mit einer Schaltfahne 46a zusammen, die ihrerseits in einer vorgegebenen Stellung an der Führungsschiene 20 angebracht ist. Der Fühler 46 kann über eine Leitung 46b ein elektromagnetisch angetriebenes, mit einem Federelement 47a ausgerüstetes 2-Wegeventil 47 ansteuern. Unter der Einwirkung lediglich dieses Federelements wird das 2-Wegeventil 47 in die dargestellte Öffnungsstellung bewegt, in welcher der Zentriertrichter auseinandergeklappt ist, und in dieser Öffnungsstellung festgehalten. Der Kolben der Kolbenstange 27b steht dabei über eine Hydraulikpumpe 48 und eine Rohrleitung 49 unter Druck, während der Raum 27c des Zylindergehäuses 27a drucklos ist.

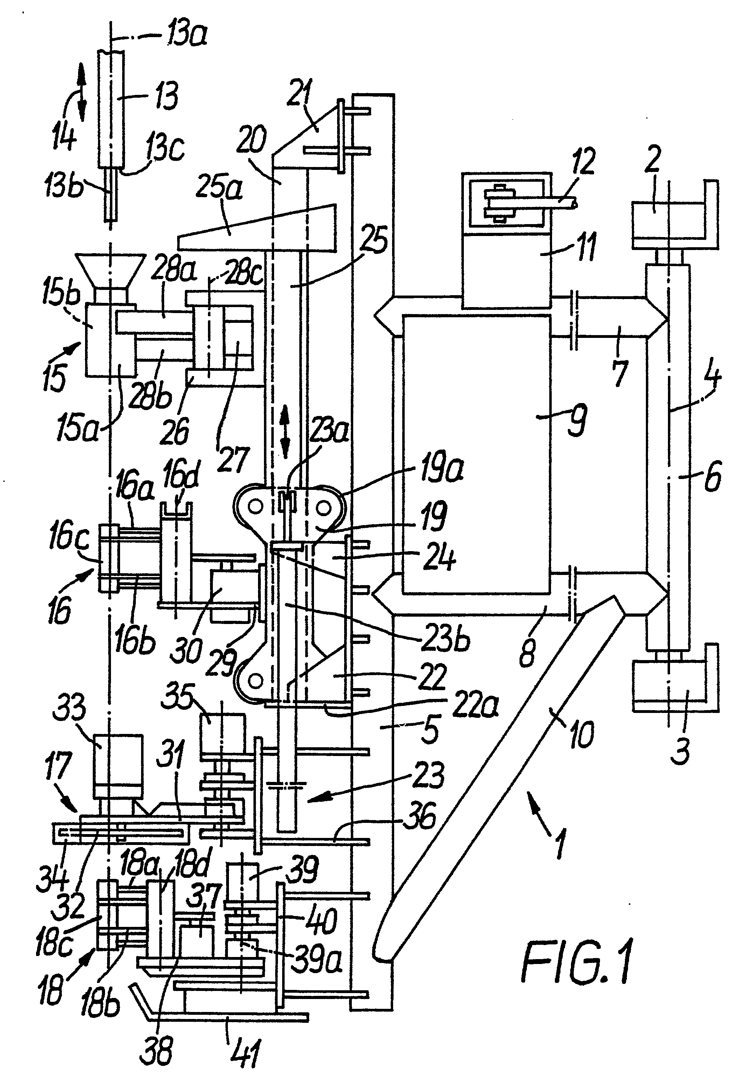

Solange der Fühler 46 der Schaltfahne 46a (abweichend von der Darstellung in Fig. 2) nicht gegenüberliegt, nimmt das 2-Wegeventil 47 die Schließstellung ein: Der Raum 27c wird demzufolge unter Einwirkung der Hydraulikpumpe 48 über eine Rohrleitung 50 unter Druck gehalten, so daß die Trichterhälften 15a und 15b aneinander anliegen. Sobald der Fühler 46 (und dementsprechend der Zentriertrichter 15) sich bei seiner Aufwärtsbewegung der Schaltfahne 46anähert und dementsprechend eine vorgegebene Lage bezüglich des Rahmens 1 (vgl. dazu Fig.1) erreicht, erzeugt der Fühler 46 einen Steuerimpuls und verstellt dadurch das 2-Wegeventil 47 in die dargestellte Öffnungsstellung. Durch die Ausstattung mit einer sensorgesteuerten Antriebseinheit läßt sich also sicherstellen, daß der Zentriertrichter in Abhängigkeit von einem vorwählbaren Hubweg des Hubwagens 19 (und damit auch des Verlängerungsträgers 25) selbsttätig auseinanderklappbar ist; die Größe des zurückzulegenden Hubweges läßt sich dabei in einfacher Weise dadurch verändern, daß der Fühler 46 und/oder die Schaltfahne 46a bezüglich des tragenden Bauteils 25 bzw. 20 (beispielsweise mittels einer Stellschraube) verschoben wird.

## Patentansprüche

1. Vorrichtung zur Handhabung an eine höhenverstellbare Sondenlanze (13) ankuppelbarer Sonden, insbesondere Meß- und Probenahmesonden, mit einem Tragrahmen (1), der um eine zur Lanzenachse (13a) parallele, ortsfeste Rahmenachse (4) in verschiedene Arbeitsstellungen schwenkbar ist und - von oben nach unten gesehen - einen ausklappbaren Zentriertrichter (15), einen am Tragrahmen höhenverfahrbaren Hubwagen (19) mit daran befestigter Sondenhaltezange (16), ein Trennorgan (17) und eine Probenhaltezange (18) aufweist, wobei das Trennorgan um eine zur Rahmenachse parallele Drehachse zwischen die beiden Haltezangen (16, 18) schwenkbar ist, **dadurch gekennzeichnet, daß** der Zentriertrichter (15) der Bewegung des Hubwagens (19) angepaßt bezüglich des Tragrahmens (1) höhenverfahrbar und die Probenhaltezange (18)um eine zur Rahmenachse (4) parallele Schwenkachse(39a)beweglich ist.

2. Vorrichtung nach Anspruch 1, dadurch gekennzeichnet, daß der Zentriertrichter (15) an dem Hubwagen (19) befestigt ist.

3. Vorrichtung nach Anspruch 2, dadurch gekennzeichnet, daß der Zentriertrichter (15) sich an einem Verlängerungsträger (25) abstützt, der an der Oberseite des Hubwagens (19) angebracht ist.

4. Vorrichtung nach einem der Ansprüche 1 bis 3, dadurch gekennzeichnet, daß der Zentriertrichter (15) eine Schalteinheit (46, 46a, 47) aufweist, über welche er, abhängig von einem einstellbaren Wert des vom Hubwagen (19) zurückgelegten Hubweges, selbsttätig auseinanderklappbar ist.

5. Vorrichtung nach Anspruch 4, dadurch gekennzeichnet, daß die Antriebseinheit (27) für die Trichterhälften (15a, 15b) mit einem Fühler (46) ausgestattet ist, dem in einer vorgegebenen Höhenlage eine Schaltfahne (46a) gegenüberliegt, wobei diese und der Fühler (46) jeweils verschiedenen Bestandteilen angehören, nämlich entweder dem Hubwagen (19) bzw. dem Verlängerungsträger (25) oder einer Führungsschiene (20).

## Claims

1. A device for handling probes, more particularly measuring and sampling probes which can be coupled to a vertically adjustable probe lance (13), having a supporting frame (1) which can be pivoted into different operating positions around a fixed frame axis (4) parallel with the lance axis (13a) and has, viewed in succession in the downward direction: a swing-out centring funnel (15); a lifting carriage (19) which has attached probe-holding tongs (16) and can be driven vertically on the supporting frame; a separating member (17); and sample-holding tongs (18), the separating member being pivotable between the two pairs of holding tongs (16, 18) around a pivoting axis parallel with the frame axis, characterized in that the centring funnel (15) can be driven vertically in relation to the supporting frame (1) with adaptation to the movement of the lifting carriage (19), and the sample-holding tongs (18) can move around a pivoting axis (39a) parallel with the frame axis (4).

2. A device according to claim 1, characterized in that the centring funnel (15) is attached to the lifting carriage (19).

3. A device according to claim 2, characterized in that the centring funnel (15) bears against an extension beam (25) which is disposed on the top side of the lifting carriage (19).

4. A device according to any of claims 1 to 3, characterized in that the centring funnel (15) has a switching unit (46, 46a, 47) via which the centring funnel can be automatically hinged apart in dependence on an adjustable value of the lifting travel performed by the lifting carriage (19).

5. A device according to claim 4, characterized in that the driving unit (27) for the funnel halves (15a, 15b) has a sensing element (46) opposite a switching lug (46a) at a given position in height, the switching lug and the sensing element (46) respectively belonging to different components, namely either to the lifting carriage (19) or the extension beam (25) or a guide rail (20).

## Revendications

1. Dispositif pour manipuler des sondes pouvant être accouplées à une lance de sonde (13) pouvant être réglée en hauteur et, en particulier, des sondes de mesure et d'échantillonnage avec un châssis de support (1) qui peut pivoter en différentes position de fonctionnement autour d'un axe de châssis (4) fixe et parallèle à l'axe de lance (13a) et – quand on regarde du haut vers le bas – un entonnoir de centrage rabattable (15), un chariot élévateur (19) pouvant être déplacé verticalement sur le châssis de support avec une pince de maintien de sonde (16) qui y est fixée, un organe de séparation (17) et une pince de maintien d'échantillon (18), tandis que l'organe de séparation peut pivoter entre les deux pinces de maintien (16, 18) autour d'un axe de rotation parallèle à l'axe du châssis, caractérisé en ce que l'entonnoir de centrage (15) est adapté au déplacement du chariot élévateur (19) et peut se déplacer verticalement par rapport au châssis de support (1) et que la pince de maintien d'échantillon (18) peut tourner autour d'un axe de pivotement (39a) parallèle à l'axe de châssis (4).

2. Dispositif selon la revendication 1, caractérisé en ce que l'entonnoir de centrage (15) est fixé au chariot élévateur (19).

3. Dispositif selon la revendication 2, caractérisé en ce que l'entonnoir de centrage (15) prend appui sur un prolongement de support (25) qui est monté sur la face supérieure du chariot élévateur (19).

4. Dispositif selon l'une des revendications 1 à 3, caractérisé en ce que l'entonnoir de centrage (15) présente un élément de commutation (46, 46a, 47) qui permet de rabattre cet entonnoir automatiquement en fonction d'une valeur réglable de la course parcourue par le chariot élévateur (19).

5. Dispositif selon la revendication 4, caractérisé en ce que l'élément de commande (27) pour les moitiés d'entonnoir (15a, 15b) est équipé d'un détecteur (46) situé face à face avec un talon de commutation (46a) ayant une position en hauteur prédéterminée, tandis que ce talon et le détecteur (46) font partie chacun de pièces différentes à savoir, soit le chariot élévateur (19) ou le prolongement de support (25), soit le rail de guidage (20).

FIG.1

# FIG.2

# FIG.3